Europäisches Patentamt

European Patent Office

Office européen des brevets

(19)

(11) Numéro de publication: **0 099 817**
**A2**

(12) **DEMANDE DE BREVET EUROPEEN**

(21) Numéro de dépôt: **83401435.9**

(22) Date de dépôt: **12.07.83**

(51) Int. Cl.³: **B 60 C 11/10**

(30) Priorité: **16.07.82 FR 8212521**
**24.11.82 FR 8219680**
**25.03.83 FR 8305003**

(43) Date de publication de la demande:
**01.02.84 Bulletin 84/5**

(84) Etats contractants désignés:
**IT**

(71) Demandeur: **Benisti, Julien**
**49 Rue Youri-Gagarine Escalier G2**
**F-92700 Colombes(FR)**

(72) Inventeur: **Benisti, Julien**
**49 Rue Youri-Gagarine Escalier G2**
**F-92700 Colombes(FR)**

(54) **Système antiglissant pour une bande d'entraînement déformable et son application aux pneumatiques, bandes transporteuses ou analogues.**

(57) La bande d'entraînement déformable (3) ou analogue comporte des moyens de passage (2) traversant la bande et débouchant, vers l'intérieur, au droit d'alvéoles (5) ou analogues prévus dans une bande compressible (6) s'étendant suivant toute la bande d'entraînement, l'ensemble étant tel qu'un phénomène d'aspiration augmentant l'adhérence est créé par la bande compressible (6) et les alvéoles (5) dans une zone de déformation de la bande d'entraînement (3) correspondant à une phase d'expansion desdits alvéoles (5).

FIG.1.

1

Système antiglissant pour une bande d'entraînement déformable et son application aux pneumatiques, bandes transporteuses ou analogues.

L'invention est relative à un système antiglissant pour une bande d'entraînement déformable, ou analogue.

Une telle bande d'entraînement peut être constituée par la bande de roulement d'un pneumatique de véhicule de tout type, notamment véhicule léger, utilitaire ou lourd. Selon une autre application, une telle bande d'entraînement peut être constituée par une bande transporteuse sans fin.

L'invention a pour but, surtout, d'améliorer l'adhérence de la bande d'entraînement déformable à la surface des objets avec lesquels elle vient en contact. Ainsi, dans le cas de pneumatiques de véhicule, l'invention a pour but d'améliorer l'adhérence des pneumatiques au sol, notamment en cas de pluie, neige ou verglas ; dans le cas d'une bande transporteuse, l'invention a pour but, d'améliorer l'adhérence avec la matière ou avec les objets à transporter de ladite bande transporteuse.

Selon l'invention, un système antiglissant pour une bande d'entraînement déformable, ou analogue, est caractérisé par le fait qu'il comporte des moyens de passage traversant la bande d'entraînement et débouchant, vers l'intérieur, au droit d'alvéoles ou analogues prévus dans une bande compressible s'étendant suivant toute la bande d'entraînement, l'ensemble étant tel qu'un phénomène d'aspiration augmentant l'adhérence est créé par la bande compressible et les alvéoles dans une zone de déformation de la bande d'entraînement correspondant à une phase d'expansion desdits alvéoles.

La bande de matière compressible peut être formée par une partie de la bande d'entraînement elle-même;

2

chaque moyen de passage et l'alvéole (ou analogue) qui lui est associé forment alors un canal borgne incliné par rapport à la direction perpendiculaire à la surface d'appui, notamment de telle sorte qu'il y ait éjection progressive de l'air du canal, avant que l'extrémité extérieure du canal n'entre en contact avec la surface d'appui, cette phase d'éjection étant suivie d'une phase d'aspiration.

L'inclinaison de chaque canal peut être effectuée, de manière telle que pour le sens normal de déplacement de la bande d'entraînement, par rapport à la surface d'appui, l'extrémité extérieure du canal ne vienne en contact avec la surface d'appui qu'après que le canal ait franchi le début de la zone de contact avec cette surface d'appui.

Chaque canal borgne est entièrement situé dans la bande d'entraînement, qui joue, en quelque sorte également le rôle de la bande compressible, comme indiqué précédemment; cette bande d'entraînement subissant d'abord un écrasement dans la zone de déformation, ce qui provoque l'éjection de l'air du canal.

Dans le cas d'un pneumatique, chaque canal borgne est situé entièrement dans la bande de roulement qui se trouve radialement à l'extérieur de la carcasse.

Selon une variante, chaque moyen de passage et l'alvéole (ou analogue) qui lui est associé, sont formés par la combinaison d'un canal borgne incliné par rapport à la direction perpendiculaire à la surface d'appui et de moyens pour faciliter le décollement du canal.

Ces moyens pour faciliter le décollement du canal peuvent être formés par un canal auxiliaire, de section transversale réduite, situé en avant du canal principal suivant le sens de déplacement de la bande d'entraînement par rapport à la surface d'appui, ce canal auxiliaire communiquant au moins avec une zone du canal principal située vers l'extrémité borgne de ce canal principal. Ce canal auxiliaire peut être formé par une rainure s'étendant suivant toute la longueur du canal principal.

Selon une autre possibilité, les moyens pour faciliter le décollement du canal borgne peuvent être formés par l'agencement du canal en deux parties, en particulier deux demi-canaux tournant leur concavité l'une vers l'autre et prévus dans deux blocs de matière séparés par une fente de largeur nulle, ces blocs étant jointifs lors de l'écrasement de la bande d'entraînement, et s'écartant légèrement lors de la phase de décompression de la bande, ce qui provoque le décollement du canal.

Selon un autre aspect de l'invention, les canaux borgnes peuvent être orientés dans le sens transversal gauche et/ou droit pour permettre une meilleure adhérence latéralement dans les virages. L'orientation des canaux peut se faire suivant une direction présentant une composante dans le sens transversal et dans le sens longitudinal.

Les sculptures de la bande de roulement aussi bien latérales que longitudinales peuvent être inclinées suivant le même angle que celui des canaux borgnes, notamment en vue de faciliter le démoulage.

L'invention concerne également les pneumatiques pour véhicules, les bandes transporteuses et d'une manière plus générale, les bandes d'entraînement déformables ou analogues, équipées du système antiglissant conforme à l'invention.

L'invention sera mieux comprise à l'aide de la description détaillée de modes de réalisation particuliers décrits avec référence aux dessins ci-annexés, mais qui ne sont nullement limitatifs.

La figure 1 de ces dessins est une section transversale schématique d'un pneumatique équipé d'un système conforme à l'invention ;

La figure 2 est une coupe partielle suivant II-II figure 1 ;

La figure 3 est une vue schématique en élévation du pneumatique ;

La figure 4, illustre, en section transversale partielle schématique une variante de réalisation.

La figure 4a est une coupe partielle suivant IV-IV figure 4.;

La figure 5 est une vue en élévation de la bande de roulement d'un pneumatique munie du système antiglissant conforme à l'invention;

La figure 6 est une coupe partielle suivant VI-VI, figure 5, développée;

La figure 7 est une coupe transversale de la bande de roulement;

La figure 8 est une représentation schématique du pneumatique et de son sens de rotation;

La figure 9 est une coupe partielle, suivant le plan longitudinal moyen du pneumatique, de la bande de roulement;

La figure 10 est une coupe partielle, longitudinale, d'une bande d'entraînement formée par la bande de roulement du pneumatique munie du système antiglissant conforme à l'invention;

La figure 11 est une vue de dessous par rapport à la figure 10 ;

La figure 12 montre, semblablement à la figure 10, une variante de réalisation ;

La figure 13 est une vue de dessous par rapport à la figure 12 ;

La figure 14 montre, semblablement à la figure 10, une autre variante de réalisation.;

La figure 15 est une vue de dessous par rapport à la figure 14 ;

La figure 16 est une coupe transversale schématique, partielle, de la bande de roulement ;

5

La figure 17, enfin, est une vue partielle en élévation de la bande de roulement.

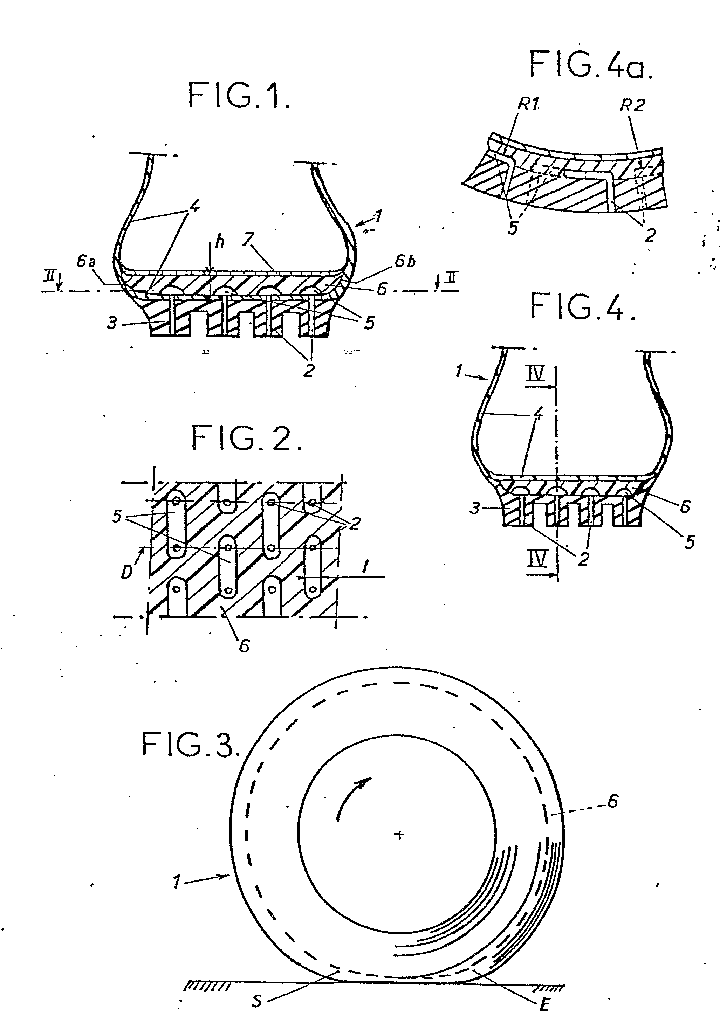

En se reportant à la figure 1, on peut voir un pneumatique 1 équipé du système permettant d'améliorer son adhérence. Ce système comporte des moyens de passage formés par des trous 2 orientés radialement, traversant la bande de roulement 3 ainsi que la carcasse 4 et débouchant à l'intérieur de l'enveloppe du pneumatique, au droit d'alvéoles 5 ou analogues prévus dans une bande 6 réalisée en matière compressible.

Cette bande 6, comme visible d'après la figure 3, s'étend suivant toute la périphérie intérieure de la carcasse 4 et forme un anneau fermé.

Les alvéoles 5, comme visible sur la figure 2, peuvent avoir une forme quelconque par exemple allongée oblongue. Plusieurs couronnes d'alvéoles 5 sont prévues suivant la largeur de la section transversale ; comme visible sur la figure 2, les alvéoles 5 d'une couronne sont décalés en quinconce par rapport aux alvéoles 5 des couronnes directement voisines pour permettre un contact permanent avec la route, une rangée d'alvéoles relayant une autre rangée en mouvement de rotation. Les trous 2 débouchent avantageusement aux extrémités longitudinales des alvéoles 5. Les trous 2, comme représenté sur la figure 2, sont disposés de préférence de telle sorte que leurs centres soient alignés suivant des droites D situées dans des plans passant par l'axe de rotation D situées dans des plans passant par l'axe de rotation du pneu. Les trous 2 peuvent être en ligne droite, brisée, conique ou autre courbe.

Une paroi souple 7 est fixée de manière étanche, notamment par collage, à l'intérieur de la carcasse 4, de telle sorte que la bande 6 est emprisonnée entre cette paroi souple 7 et la carcasse. Le pneumatique peut être du type à chambre à air, auquel cas la

6

chambre à air vient s'appliquer contre la paroi 7, ou du type sans chambre à air ou du type plein.

La bande 6 peut être réalisée sous forme d'une bande massive en une matière élastomère ou toute matière appropriée.

Selon une variante, cette bande 6 peut être réalisée sous forme d'une chambre annulaire fermée de manière étanche, avec valve, contenant un gaz, notamment de l'air, sous une pression réglable équilibrant celle du pneu, ou même variant en fonction de la charge du véhicule.

L'ensemble est tel que dans la zone E, (Fig. 3) du pneumatique qui entre en contact avec le sol, et qui s'écrase sous l'effet de la charge supportée par le pneu, la compression de la bande 6 et des alvéoles provoque une expulsion de l'air, contenu dans ces alvéoles, par les trous 2. Dans la zone S (fig. 3) du pneumatique qui quitte le sol, la bande est libérée progressivement de la charge et les alvéoles 5 reprennent leur volume en aspirant l'air à travers les trous 2.

Un phénomène de ventouse est ainsi créé par aspiration, qui augmente l'adhérence du pneu sur le sol.

Selon une variante représentée sur la figure 4, le système à bande compressible 6 muni d'alvéoles 5 peut être placé radialement à l'extérieur de la carcasse 4. Cette carcasse n'est alors pas traversée par les trous 2. Cette dernière variante peut convenir, notamment, pour des pneus usagés qui sont destinés à subir un rechapage ; la bande 6 munie des alvéoles 5 peut être insérée lors du rechapage entre la carcasse et la bande de roulement rapportée munie des trous 2.

Le cas échéant, la bande 6 et la bande 3 peuvent former une seule et même bande, les alvéoles 5 étant prévus dans une région de la bande 3 faisant fonction de bande 6.

7

Comme visible d'après la figure 4a, les alvéoles 5 s'étendent suivant la direction périphérique, sensiblement à angle droit par rapport à la direction radiale. Dans le mode de réalisation des figures 4 et 4a, un seul trou radial 2 est prévu à une extrémité longitidinale d'un alvéole 5. Pour éviter un sens de montage déterminé du pneumatique, on répartit les alvéoles 5 en deux séries alternées R1, R2, orientées en sens contraire. Quel que soit le sens de rotation du pneumatique, pour une des séries, les alvéoles 5 formant canaux borgnes, se trouvent en avant du trou 2 associé.

Le phénomène d'écrasement du pneumatique sur le sol et donc le phénomène de ventouse décrit précédemment est accentué lors d'un report de charge par exemple lors du freinage ou dans un virage, ce qui contribue à améliorer l'adhérence sur route mouillée, verglacée, enneigée ; dans ce cas les perforations constituent des crampons supplémentaires ce qui augmente l'adhérence au sol notamment au freinage.

Ce système est utilisable pour tout véhicule, que le pneumatique soit réalisé en matière élastomère ou en matière plastique ou autre.

La liaison entre la bande 6 et la paroi 7 (fig. 1) peut être réalisée par un ensemble de rainures et de nervures circonférentielles prévues respectivement sur les faces de la bande et de la paroi venant en contact.

L'amélioration de l'adhérence est obtenue en cas de pluie, de neige ou de verglas, également sur route normale ainsi qu'au freinage sur toutes les routes.

Le nombre de rangées d'alvéoles, la forme de ces alvéoles de même que la disposition et la forme des trous 2 sont choisis en fonction du type de pneumatique de manière à procurer les résultats les plus satisfaisants. Dans cette application aux pneumatiques, la largeur 1 de chaque alvéole peut être de plusieurs mm. L'épaisseur h,dans le sens radial,de la bande 6 pourrait être de l'ordre de 10 mm.

tandis que l'épaisseur de la paroi 7 pourrait être de l'ordre de 2 à 10mm.

Les bords 6a, 6b, de la bande 6 sont, de préférence, taillés en biseau pour épouser le contour de la section transversale du pneu.

Ce système peut s'appliquer aux pneumatiques de tous types, y compris aux pneumatiques pour train d'atterrissage d'aéronef.

Avec un pneumatique équipé de ce système, une surface lisse de route n'est plus un inconvénient. Ce système s'oppose au phénomène "d'aquaplaning". Sur route enneigée, les moyens de passage qui comprennent des orifices débouchant dans la bande de roulement, jouent le rôle de crampons supplémentaires.

Lorsque la bande compressible 6 est réalisée sous la forme d'une chambre annulaire fermée de manière étanche contenant un gaz sous pression, le véhicule repose alors sur deux coussins d'air d'où un confort amélioré ; le système offre en outre une plus grande sécurité en réduisant les risques de crevaison de la chambre à air proprement dite dans la plupart des cas.

D'une manière plus générale, l'invention s'applique à une bande d'entraînement déformable ou analogue.

Dans le cas d'une bande transporteuse sans fin, la bande transporteuse passe sur des rouleaux aux deux extrémités et s'enroule suivant un demi-cercle. Dans la zone s'enroulement de la bande transporteuse, on retrouve des déformations semblables à celles des zones E et S du pneumatique.

Dans la région où la bande transporteuse quitte un rouleau, les alvéoles 5 d'une bande compressible 6 fixée sur la surface intérieure de la bande transporteuse se trouveront dans une phase d'expansion avec création d'un phénomène d'aspiration à travers les moyens de passage formés par les trous 2 traversant la bande transporteuse. En plaçant les objets à transporter au contact de la bande transporteuse dans cette zone où se produit un phénomène d'aspiration; lesdits objets peuvent être soumis à un effet de ventouse les appliquant contre la bande ; cet effet de ventouse peut se conserver pendant toute la durée de transport de l'objet par la bande, si une étanchéité satisfaisante est réalisée entre la surface de l'objet et les orifices 2.

Les dimensions, la forme et le nombre des alvéoles 6 et des orifices 2 sont déterminés en fonction de la bande transporteuse destinée à être équipée du système de l'invention.

La bande transporteuse, qui constitue alors la bande d'entraînement 3 déformable, est généralement en matière élastomère et la bande compressible 6 est fixée contre cette bande, d'une manière semblable à celle représentée sur la figure 4.

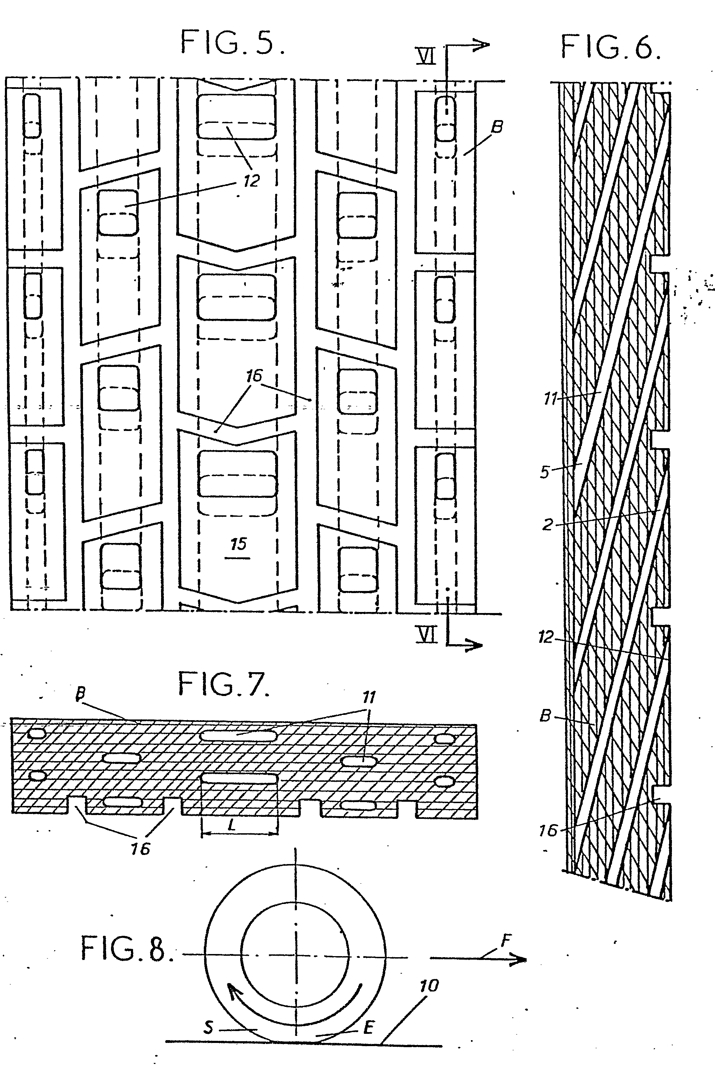

Les figures 5 à 9 sont relatives à une variante de réalisation.

Comme montré sur la figure 5, la bande de roulement B du pneumatique, qui forme la bande d'entraînement déformable, comporte des moyens de passage 2 traversant cette bande et débouchant, vers l'intérieur, au droit d'alvéoles 5 ou analogues. L'ensemble est tel qu'un phénomène d'aspiration augmentant d'adhérence est créé dans une zone S (fig. 8) de déformation de la bande de roulement au contact de la surface d'appui formée par le sol 10. Cette zone S correspond à la partie du pneumatique qui quitte le sol, la bande B étant libérée progressivement de la charge et les alvéoles 5 reprenant leur volume et aspirant l'air à travers les moyens de passage 2 formés par des trous.

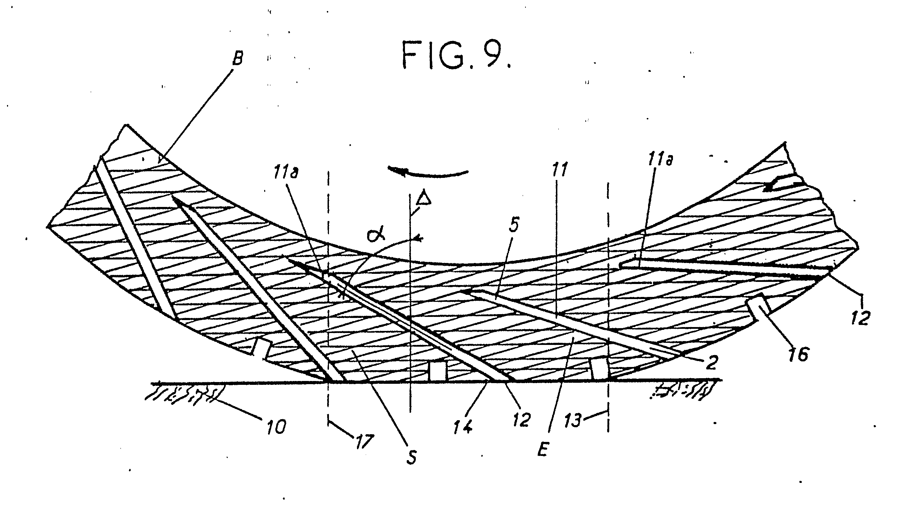

Chaque moyen de passage 2 et l'alvéole 5 qui lui est associé forment un canal borgne 11 incliné d'un angle α par rapport à la direction Δ perpendiculaire à la surface d'appui 10, de telle sorte qu'il y ait éjection progressive de l'air du canal avant que l'extrémité extérieure 12 du canal n'entre en contact avec la

10

surface d'appui 10 (voir notamment fig. 9).

Lorsque la bande de roulement n'est pas déformée, le canal 11 est rectiligne ; la partie de ce canal située vers l'extrémité borgne joue le rôle de l'alvéole 5, tandis que la partie du canal 11 située vers l'extrémité 12 joue le rôle du moyen de passage 2.

L'inclinaison de chaque canal 11, par rapport à la direction Δ est effectuée de manière telle que pour le sens normal de déplacement de la bande d'entraînement, (c'est-à-dire, dans le cas d'un pneumatique, pour le sens de marche avant illustré par la flèche F, par rapport au sol 10), l'extrémité extérieure 12 du canal ne vient en contact avec le sol 10 qu'après que le canal 11 ait franchi (voir Fig. 9) le début 13 de la zone de contact 14 du pneumatique avec le sol 10.

Comme visible sur les dessins, les canaux 11 sont indépendants les uns des autres et sont ménagés dans des blocs 15 de la bande de roulement séparés par un système de rainures 16 longitudinales et transversales.

Avantageusement, l'inclinaison du canal 11 est telle que lorsque l'extrémité extérieure 12 du canal entre en contact avec le sol 10 (voir Fig. 9) l'autre extrémité borgne du canal 11 se trouve au-delà et en dehors de la limite 17 de la zone de contact 14. L'angle α est, de préférence, égal ou supérieur à 60°.

La section transversale de chaque canal borgne 11 peut présenter une dimension L plus importante suivant une direction parallèle à la surface d'appui 10. Il convient de noter, cependant, que la section transversale des canaux 11 peut avoir des formes très différentes de celles représentées sur les dessins et qui est sensiblement rectangulaire.

Le fonctionnement du système antiglissant se déduit des explications précédentes.

L'écrasement progressif de la bande de roulement

11

B, dans la zone E (fig. 8 et 9) du pneumatique qui avance en contact avec le sol, chasse l'air contenu dans les canaux 11.

Lorsque l'extrémité extérieure 12 d'un canal 11 est fermée par sa venue en contact avec le sol 10, un phénomène d'aspiration est produit par l'expansion de la partie 11a (fig. 9) du canal située en dehors de la surface portante 14 du pneumatique.

Plus précisément, la partie 11a est située à l'extérieur d'une surface cylindrique à génératrices verticales ayant pour base la surface de contact 14.

L'extrémité extérieure 12 ou orifice de chaque canal 11 n'aura pas tendance à se boucher du fait de l'éjection d'air au moment de l'écrasement.

En cas de grande vitesse, ou même lorsque le véhicule est chargé, l'efficacité du système est accentuée au freinage par le report de charge qui produit un écrasement plus important et donc une aspiration plus forte.

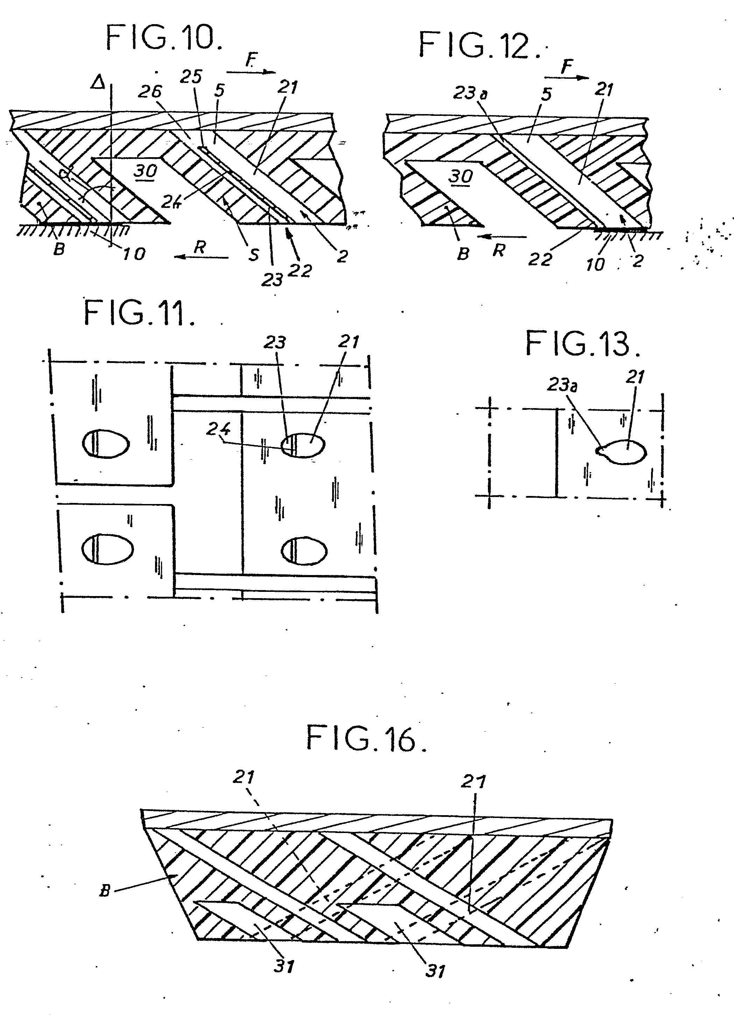

Les figures 10 à 17 montrent d'autres variantes de réalisation.

Comme montré sur la figure 10, la bande de roulement B du pneumatique, qui forme la bande d'entraînement déformable, comporte des moyens de passage 2 traversant cette bande et débouchant, vers l'intérieur, au droit d'alvéoles 5 ou analogues. L'ensemble est tel qu'un phénomène de ventouse, par aspiration, augmentant l'adhérence est créé dans une zone S de déformation de la bande au contact de la surface d'appui formée par le sol 10.

Chaque moyen de passage 2 et l'alvéole 5 sont formés par la combinaison d'un canal borgne 21 incliné d'un angle α par rapport à la direction Δ perpendiculaire à la surface d'appui 10, et de moyens 22 pour faciliter le décollement du canal 11.

12

Dans la réalisation des figures 10 et 11, les moyens 22 comprennent un canal auxiliaire 23, de section transversale réduite, par rapport à celle du canal 21. Ce canal 23 est situé, par rapport au canal 21, en avant selon le sens de déplacement ou de rotation R de la bande B par rapport au sol 10. Si on prend comme sens de référence le sens de déplacment avant F du véhicule, le canal 23 est situé à l'arrière du canal 21. Selon la réalisation des figures 1 et 2, une cloison inclinée 24 sépare le canal 21 du canal 23, cette cloison 24 s'arrêtant en 25 à une certaine distance du fond du canal borgne 21. L'espace 26 établit une communication entre le canal auxiliaire 23 et une zone du canal 21 située vers l'extrémité borgne de ce canal. La cloison 24 subsistera donc jusqu'à usure maximale de la bande de roulement B.

Le fonctionnement des moyens 22 est le suivant.

Au moment où la bande B, dans la région de l'extrémité extérieure des canaux 21, 22 commence à quitter le sol, le canal 23 qui présente une surface réduite quitte le sol le premier. L'effort nécessaire pour décoller du sol l'extrémité du canal 23 de section réduite, sera moins grand que pour un canal de section plus importante. Le décollement du canal 23 permet l'entrée d'air dans le canal 21 par la communication 26 et facilite donc le décollement de ce canal 21 par rapport à la surface d'appui 10. La résistance au roulement sera donc réduite.

Les figures 12 et 13 montrent une variante selon laquelle le canal auxiliaire est formé par une rainure 23a, de section réduite par rapport au canal 21, et s'étendant sur toute la longueur de ce canal. Cette rainure 23a est également située en arrière du canal 21 suivant le sens d'avance F du véhicule, ou en avant de ce canal si l'on considère le sens de rotation R de la bande au niveau de son contact avec le sol.

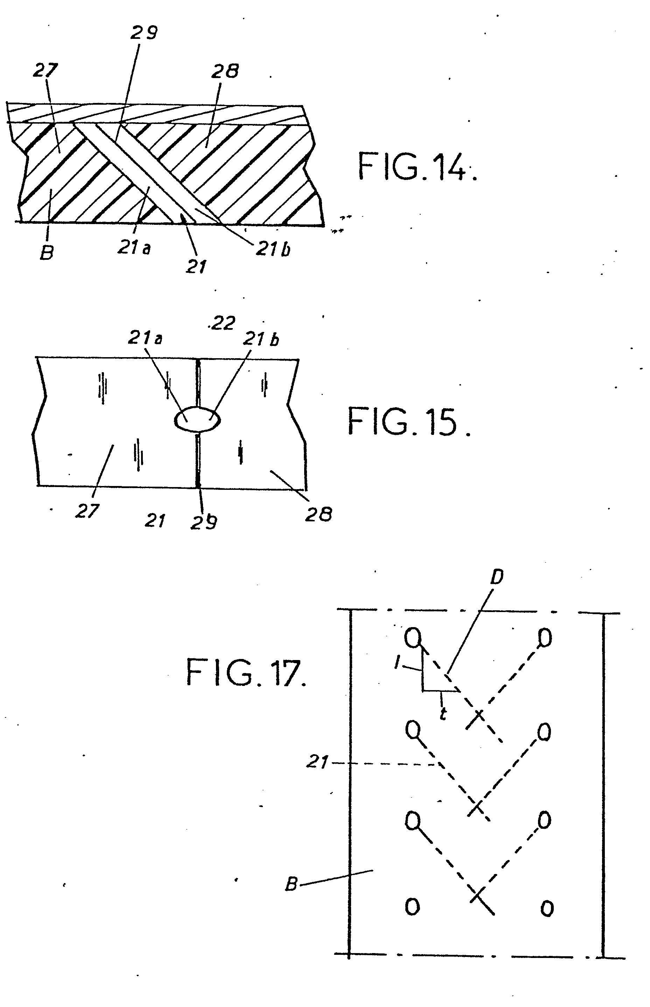

Selon la variante de réalisation des figures 14 et 15, les moyens 22 sont formés par l'agencement du ca-

13

nal 21 en deux parties 21a, 21b, par exemple deux demi-canaux 21a, 21b à section demi-circulaire, tournant leur concavité l'un vers l'autre. Ces deux demi-canaux sont prévus dans deux blocs 27, 28 de la bande B séparés par une fente 29 de largeur nulle. Les blocs 27, 28 peuvent être formés par des lames transversales. Les blocs 27, 28 sont jointifs lors de l'écrasement de la bande B, c'est-à-dire hermétiquement étanches.

Les deux demi-canaux 21a, 21b, appuyés l'un contre l'autre reconstituent le canal borgne 21.

Lorsque la région de la bande B contenant les canaux 21a, 21b, commence à être soulagée du poids du véhicule, les blocs 27, 28 s'écartent légèrement l'un de l'autre en faisant réapparaître la fente 29 qui permet une entrée d'air dans le canal formé par l'ensemble 21a, 21b. Le décollement de ce canal s'en trouve facilité.

Comme visible sur la figure 16, les canaux 21 peuvent être inclinés dans le sens transversal gauche ou droit ou dans les deux sens, pour permettre une meilleure adhérence latérale dans les virages à gauche et à droite.

Comme visible d'après la figure 17, les canaux 21 peuvent être orientés suivant une direction D présentant une composante $t$ suivant la direction transversale et $l$ suivant la direction longitudinale.

Comme visible sur les figures 10 et 12, les sculptures transversales 30 de la bande de roulement, qui permettent l'évacuation de l'eau, peuvent être inclinées suivant le même angle que celui des canaux 21. Le démoulage s'en trouve facilité, et le cramponnage est plus efficace sur les routes, notamment en cas de neige.

De même comme visible sur la figure 16, les sculptures longitudinales 31 de la bande de roulement peuvent être inclinées suivant le même angle que les canaux 21 orientés dans le sens transversal.

Ce parallélisme entre les sculptures et les canaux permet de réduire l'angle d'orientation des canaux sans réduire la profondeur des sculptures. Il est également possible de réduire l'épaisseur de la bande de roulement.

Il est à noter que l'extrémité borgne des canaux forme, en quelque sorte, l'alvéole 5 lequel est situé dans la bande de roulement B réalisée en une matière élastomère, compressible au sens déformable. ou qui s'écrase, sous l'effet d'une charge.

L'angle α d'inclinaison des canaux est inférieur ou égal à 90°, d'un côté ou de l'autre de la direction Δ.

Le système antiglissant de l'invention permet d'améliorer l'adhérence ainsi que la tenue de route. La conduite est donc plus sûre ; le conducteur dispose d'une plus grande maitrise de la direction, notamment dans les virages.

Le confort est amélioré par la flexibilité et la souplesse de la structure alvéolée.

Les distances de freinage sont réduites.

15

REVENDICATIONS

1. Système antiglissant pour une bande d'entraînement déformable, ou analogue, caractérisé par le fait qu'il comporte des moyens de passage (2) traversant la bande d'entraînement (3) et débouchant, vers l'intérieur, au droit d'alvéoles (5) ou analogues, prévus dans une bande compressible (6) s'étendant suivant toute la bande d'entraînement, l'ensemble étant tel qu'un phénomène d'aspiration augmentant l'adhérence est créé par la bande compressible (6) et les alvéoles (5) dans une zone de déformation (S) de la bande d'entraînement correspondant à une phase d'expansion desdits alvéoles (5).

2. Système selon la revendication 1, caractérisé par le fait que chaque moyen de passage (2) est formé par un orifice relié à un alvéole (5).

3. Système selon la revendication 1 ou 2, caractérisé par le fait que la bande de matière compressible (6) est réalisée sous forme d'une bande massive ou alvéolée en une matière appropriée, matière élastomère ou plastique, ou mélange synthétique.

4. Système selon la revendication 1 ou 2, caractérisé par le fait que la bande compressible (6) est réalisée sous forme d'une chambre annulaire, fermée de manière étanche, contenant un gaz, notamment de l'air, sous pression réglable.

5. Système selon l'une quelconque des revendications précédentes, caractérisé par le fait que la bande (6) de matière compressible est fixée directement contre la bande d'entraînement (3).

6. Système selon l'une quelconque des revendications précédentes, caractérisé par le fait qu'une paroi souple (7) est fixée de telle sorte que la bande compressible (6) soit emprisonnée entre cette paroi souple (7) et la bande d'entraînement (3), ladite bande compressible (6) pouvant former une seule pièce avec la paroi souple (7).

7. Système antiglissant selon la revendication 1, caractérisé par le fait que chaque moyen de passage (2) et l'alvéole (5) (ou analogue) qui lui est associé forment un canal borgne (11) incliné par rapport à la direction (Δ) perpendiculaire à la surface d'appui (10) de telle sorte qu'il y ait éjection progressive de l'air du canal, avant que l'extrémité extérieure (12) du canal n'entre en contact avec la surface d'appui, cette phase d'éjection étant suivie d'une phase d'aspiration.

8. Système selon la revendication 7, caractérisé par le fait que l'inclinaison de chaque canal (11) est effectuée de manière telle que pour le sens normal de déplacement de la bande d'entraînement (B) par rapport à la surface d'appui (10), l'extrémité extérieure (12) du canal ne vienne en contact avec la surface d'appui (10) qu'après que le canal (11) ait franchi le début (13) de la zone de contact (14) avec cette surface d'appui.

9. Système selon la revendication 8, caractérisé par le fait que l'inclinaison du canal (11) est telle que lorsque l'extrémité extérieure (12) du canal entre en contact avec la surface d'appui (10) l'autre extrémité borgne (11a) du canal se trouve au-delà et en dehors de la limite (17) de la zone de contact (14) avec la surface d'appui (10).

10. Système selon l'une quelconque des reven- dications 7 à 9, caractérisé par le fait que la section transversale de chaque canal borgne (11) présente une dimension (L)plus importante suivant une direction parallèle à la surface d'appui (10).

11. Système selon l'une quelconque des revendications 7 à 10, caractérisé par le fait que chaque canal borgne (11) est situé entièrement dans la bande d'entraînement (B) qui subit d'abord un écrasement dans la zone (E) de déformation, ce qui provoque l'éjection de l'air du canal (11), puis reprend sa forme, ce qui provoque l'aspiration.

12. Application du système selon l'une quelconque des revendications 7 à 11 à un pneumatique pour véhicule, caractérisée par le fait que chaque canal borgne (11) est situé entièrement dans la bande de roulement (B) qui se trouve radialement à l'extérieur de la carcasse.

13. Système antiglissant selon la revendication 1, caractérisé par le fait que chaque moyen de passage (2) et l'alvéole (5)(ou analogue) qui lui est associé, sont formés par la combinaison d'un canal borgne (21) incliné par rapport à la direction perpendiculaire à la surface d'appui et de moyens (22) pour faciliter le décollement du canal.

14. Système selon la revendication 13, caractérisé par le fait que les moyens (22) pour faciliter le décollement du canal (21) sont formés par un canal auxiliaire (23), de section transversale réduite, situé en avant du canal principal suivant le sens de déplacement (R) de la bande d'entraînement (B) par rapport à la surface d'appui, ce canal auxiliaire (23) communiquant au moins avec une zone du canal principal (21) située vers l'extrémité borgne de ce canal principal.

15. Système selon la revendication 14, caractérisé par le fait que le canal auxiliaire est formé par une rainure (23a) s'étendant suivant toute la longueur du canal principal (21).

16. Système selon la revendication 13, caractérisé par le fait que les moyens (22) pour faciliter le décollement du canal sont formés par l'agencement du canal en deux parties en particulier deux demi-canaux (21a, 21b) tournant leur concavité l'un vers l'autre et prévus dans deux blocs (27, 28) de matière séparés par une fente nulle (29) permettant l'étanchéité de la jointure des blocs (27, 28) lors de l'écrasement de la bande d'entraînement (B), et s'écartant légèrement lors de la phase de décompression de la bande, ce qui provoque le décollement du canal.

18

17. Système antiglissant pour une bande d'entraînement déformable, ou analogue, qui comporte des moyens de passage traversant la bande d'entraînement et débouchant, vers l'intérieur, au droit d'alvéoles ou analogues, l'ensemble étant tel qu'un phénomène de ventouse par aspiration soit créé au contact d'une surface d'appui, selon la revendication 1 , caractérisé par le fait que les canaux borgnes (21) sont inclinés dans le sens transversal gauche et/ou droit.

18. Système selon la revendication 17, caractérisé par le fait que les canaux borgnes (21) sont orientés suivant une direction présentant une composante (t) dans le sens transversal et une composante (l) dans le sens longitudinal.

19. Système selon la revendication 17 ou 18, caractérisé par le fait que les sculptures (30, 31) de la bande de roulement sont inclinées suivant le même angle que les canaux borgnes (21).

1/5

0099817

FIG.1.

FIG.4a.

FIG.2.

FIG.4.

FIG.3.

FIG.5.

FIG.6.

FIG.7.

FIG.8.

# FIG. 9.

FIG.10.

FIG.12.

FIG.11.

FIG.13.

FIG.16.

FIG.14.

FIG.15.

FIG.17.